(19) Europäisches Patentamt
European Patent Office
Office européen des brevets

(11) **EP 1 662 500 A1**

(12) **EUROPEAN PATENT APPLICATION**
published in accordance with Art. 158(3) EPC

(43) Date of publication:
**31.05.2006 Bulletin 2006/22**

(51) Int Cl.:
***G11B 11/105*** (2000.01)

(21) Application number: **04772200.4**

(22) Date of filing: **19.08.2004**

(86) International application number:
**PCT/JP2004/012244**

(87) International publication number:
**WO 2005/024816 (17.03.2005 Gazette 2005/11)**

(84) Designated Contracting States:
**AT DE FR GB**

(30) Priority: **04.09.2003 JP 2003312543**

(71) Applicant: **SONY CORPORATION**
**Tokyo 141-0001 (JP)**

(72) Inventors:
• **TANAKA, Yasuhito,**
**C/O SONY CORPORATION**
**Tokyo 141-0001 (JP)**
• **MIKI, Takeshi,**
**C/O SONY CORPORATION**
**Tokyo 141-0001 (JP)**

• **SAKAMOTO, Tetsuhiro,**
**C/O SONY CORPORATION**
**Tokyo 141-0001 (JP)**
• **FUJITA, Goro,**
**C/O SONY CORPORATION**
**Tokyo 141-0001 (JP)**
• **FUJIIE, Kazuhiko,**
**C/O SONY CORPORATION**
**Tokyo 141-0001 (JP)**

(74) Representative: **Müller, Frithjof E.**
**Müller Hoffmann & Partner**
**Patentanwälte**
**Innere Wiener Strasse 17**
**81667 München (DE)**

(54) **METHOD FOR THERMAL TREATMENT JUDGMENT ON MAGNETO-OPTICAL INFORMATION RECORDING MEDIUM AND DEVICE FOR THERMAL TREATMENT JUDGMENT**

(57) A laser beam from an LD 11 is irradiated onto a magnetooptic disk 33 by a predetermined power for a heat treatment. After the heat treatment, the laser beam of a power smaller than the power upon heat treatment is irradiated to the heat-treated area. Reflection light of the laser beam of the small power enters photodetectors 24 and 26 and reflection light amounts of a P wave and an S wave are detected, respectively. A differential detecting circuit 27 detects a level of a magnetooptic signal corresponding to the heat-treated area on the basis of the reflection light amounts of the P wave and the S wave. A controller 28 determines whether or not the magnetooptic signal level detected by the differential detecting circuit 28 lies within a permissible range. If it is out of the range, the power of the laser beam to execute the heat treatment is adjusted and the process of a magnetooptic disk is stopped or a message showing such a fact is displayed, or the like.

*Fig. 1*

## Description

Technical Field

The invention relates to a heat treatment determining method and a heat treatment determining apparatus for determining whether or not a heat treatment (annealing treatment) when a magnetooptic information recording medium to which information is recorded by using a laser beam is manufactured has properly been executed.

Background Art

In recent years, many magnetooptic information recording media (magnetooptic disks) have been proposed as rewritable recording media of a high density. Among them, an attention is paid to a magnetooptic disk of a DWDD (Domain Wall Displacement Detection) system. As disclosed in the Official Gazette of Japanese Patent No. 3332458, according to such a system, a magnetooptic information recording medium comprising a magnetic three-layered film of at least a displacement layer, a switching layer, and a recording layer is used and there is used such a feature that, when a signal is reproduced, a domain wall of the displacement layer is instantaneously moved in a region where a magnetic film temperature is equal to or higher than a Curie temperature of the switching layer. According to such a system, a size of magnetic domain can be substantially enlarged and a recording density of the magnetooptic disk can be remarkably increased.

The DWDD system can be regarded as one of effective reproducing methods in terms of a point that a very large signal can be reproduced even from a small recording magnetic domain corresponding to a period which is equal to or less than optical limit resolution of reproduction light and the high density can be realized without changing a wavelength of light, a numerical aperture (NA) of an objective lens, or the like.

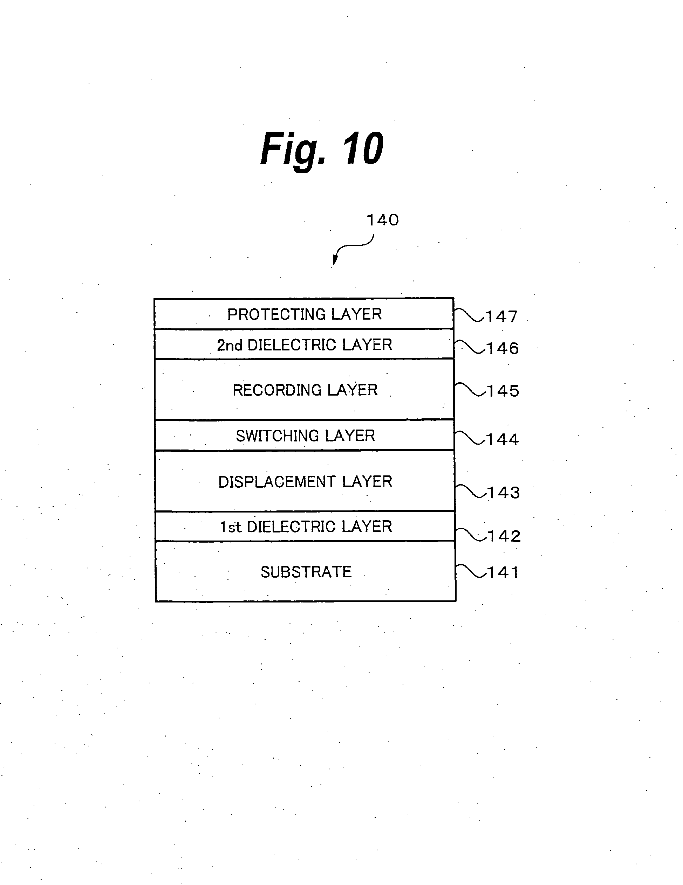

The magnetooptic disk of the general DWDD system has a construction as shown in Fig. 10. A magnetooptic information recording medium 140 shown in Fig. 10 is constructed in such a manner that a first dielectric layer 142, a displacement layer 143, a switching layer 144, a recording layer 145, a second dielectric layer 146, and a protecting layer 147 are laminated on a substrate 141 in this order. The substrate 141 is a transparent substrate made of, for example, glass, polycarbonate, polyolefin, or the like.

The first dielectric layer 142 is made of, for example, SiN, AlN, or the like and has a thickness of about 30 nm. The displacement layer 143 is made of a perpendicular magnetic film in which a domain wall coercive force is relatively smaller and a domain wall displacement speed is relatively larger than those of the recording layer 145 and is, for example, a GdFeCo layer having a thickness of 30 to 60 nm.

The switching layer 144 has a Curie temperature lower than those of the displacement layer 143 and the recording layer 145 and is, for example, a GdFeCoAl layer having a thickness of 10 to 15 nm.

The recording layer 145 is, for example, a TbFeCo layer having a thickness of about 50 nm. The second dielectric layer 146 is made of, for example, SiN, AlN, or the like and has a thickness of about 30 nm. The protecting layer 147 is, for example, a UV (ultraviolet) cured resin having a thickness of 5 to 10 $\mu$m. Those layers are laminated on the substrate 141 on which guide grooves (tracks) have previously been formed.

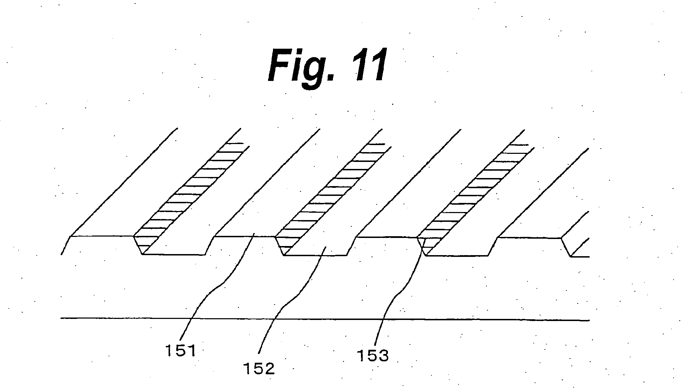

The guide grooves of the substrate 141 are formed as shown in, for example, Fig. 11. The magnetooptic information is recorded in a wide width portion in Fig. 11, that is, on a land 151 and a groove 152 and a magnetic layer laminated in a wall surface portion 153 becomes a target of the heat treatment (annealing treatment). By the heat treatment, the portion of the magnetic layer serving as a treatment target is non-magnetized or becomes an in-plane magnetic film.

The land denotes a portion on a remote side from a surface (for example, under surface of Fig. 11) where a laser beam for recording/reproduction is inputted. A portion on a near side from such a surface is called a groove. The laser beam for the heat treatment is irradiated from the surface (for example, top surface of Fig. 11) opposite to the side of the laser beam for recording/reproduction.

Since an area between the tracks is heat-treated, in the case of recording onto both of the land and the groove, the wall surface portion 153 is heat-treated. However, in the case of recording data onto one of the land and the groove, the other is heat-treated.

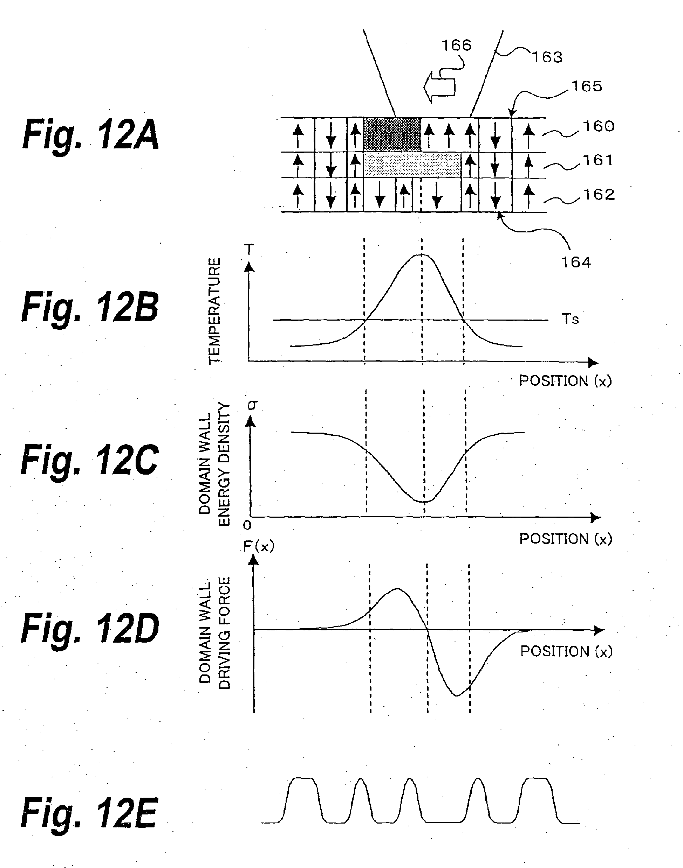

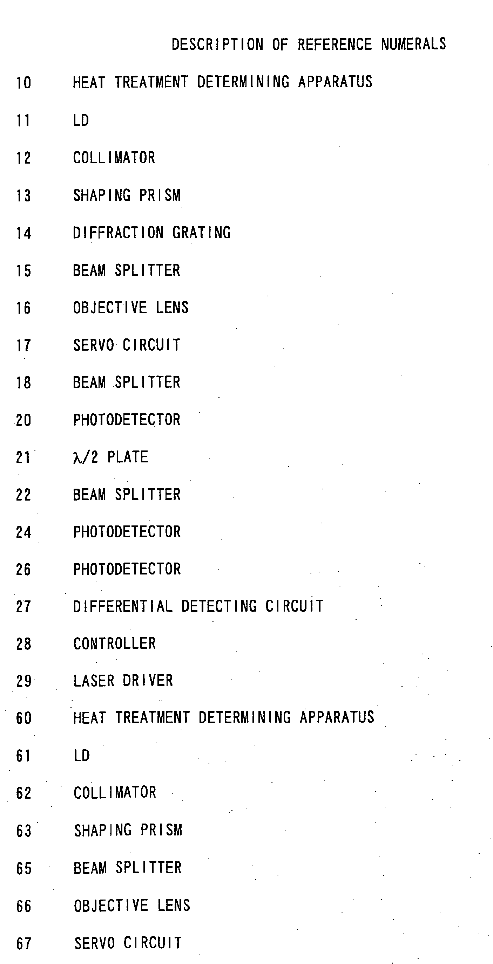

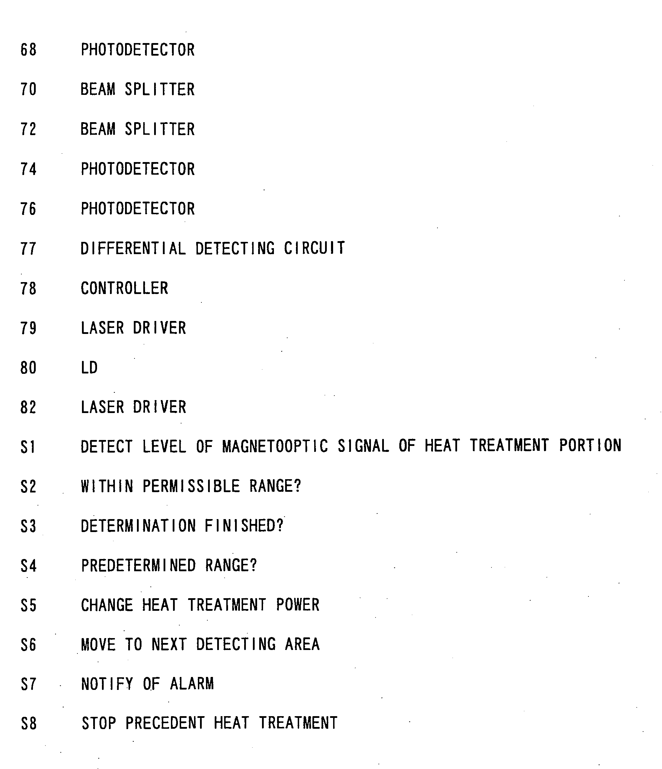

The reproduction of a signal according to the DWDD system will now be described with reference to Figs. 12A to 12E. Fig. 12A shows an example of a cross sectional view of the magnetooptic information recording medium which is used for reproduction of the DWDD system. This medium is illustrated upside down from the magnetooptic information recording medium 140 shown in Fig. 10. In a manner similar to the magnetooptic information recording medium 140 of Fig. 10, a magnetic layer comprising a displacement layer 160, a switching layer 161, a recording layer 162 is formed. In the state where a reproduction laser beam 163 is not irradiated, in each layer, a switched coupling force acts and an atomic spin in each of the displacement layer 160 and the switching layer 161 is oriented in the same direction as that of an atomic spin 164 in the recording layer 162. A domain wall 165 is formed in a boundary portion of the adjacent atomic spins (the directions of the atomic spins are opposite).

When the reproduction laser beam 163 is irradiated to the magnetooptic information recording medium, for example, distribution of a temperature T of the magnetic layer as shown in Fig. 12B is obtained. The reproduction laser beam 163 is irradiated from a substrate side as shown in Fig. 12A. Ts denotes a Curie temperature of the switching layer 161. In association with such temperature distribution, distribution of a domain wall energy density σ is formed as shown in Fig. 12C. Generally, since the domain wall energy density decreases in accordance with an increase in temperature of the magnetic layer, distribution in which the density becomes lowest at the position of the highest temperature shown in Fig. 12B is obtained. Thus, a domain wall driving force F(x) to move the domain wall 165 in the direction of the low domain wall energy density, that is, in the direction of the high temperature of the magnetic layer. The distribution of the domain wall driving force F(x) is shown in Fig. 12D.

When there is a gradient (change) of the domain wall energy density as mentioned above, the domain wall driving force F(x) shown by the following equation (1) acts on the domain wall of each layer.

$$F(x) = -\partial\sigma/\partial x \qquad \ldots (1)$$

The domain wall driving force F(x) acts so as to move the domain wall 165 in the direction of the low domain wall energy density. That is, at the position where the temperature of the magnetic layer is lower than the Curie temperature Ts of the switching layer, since the layers are mutually switched-coupled even if the domain wall driving force F(x) due to such a temperature gradient acts, the movement of the domain wall does not occur because it is blocked by a large domain wall coercive force of the recording layer. However, at the position where the temperature of the magnetic layer is higher than the Curie temperature Ts of the switching layer, since the switched-coupling between the displacement layer 160 and the recording layer 162 is cut, the domain wall of the displacement layer 160 whose domain wall coercive force is small can be moved by the domain wall driving force F (x) according to the temperature gradient. Therefore, when the reproduction laser beam 163 is irradiated upon scanning of the magnetooptic information recording medium, at the moment when the domain wall exceeds the position of the Curie temperature Ts and enters the coupling switching area, the domain wall of the displacement layer 160 moves toward the high temperature side (direction shown by an arrow 166 in Fig. 12A).

By the principle as mentioned above, the domain walls formed on the magnetooptic information recording medium at intervals corresponding to the recording signal are moved every scan which is executed by the laser beam. Thus, a size of magnetic domain effectively recorded is enlarged upon reproduction, a reproduction carrier signal can be increased, and the reproduction exceeding the optical limit can be performed. A waveform shown in Fig. 12E relates to an example of a reproduction waveform which is obtained from the magnetic layer in Fig. 12A. In this instance, the signal at the low level is obtained when the atomic spins in the recording layer 162 are oriented downwardly.

The equation (1) showing the domain wall driving force F(x) in the reproduction by the DWDD system is inherently derived from the following equation (2).

$$F(x) = 2M(x)\cdot Hd(x) + 2M(x)\cdot Ha - \sigma(x)/x - \partial\sigma/\partial x$$
$$\ldots (2)$$

where,

M(x):     magnetization of the displacement layer 160
Hd(x):    demagnetizing field
Ha:       external magnetic field such as a leakage flux or the like from the recording layer 162
σ(x):     domain wall energy per unit area

For example, as disclosed in "Journal of Magnetic Society of Japan", Vol. 22, Supplement No. S2, 1998, pp. 47-50, by extremely reducing the magnetization of the displacement layer 160, the first term (2M(x)·Hd(x)) and the second term (2M(x)·Ha) of the right side of the equation (2) can be ignored. Further, if the apparatus is constructed so that no closed magnetic domains are formed by, for example, non-magnetizing both sides of the recording track (guide groove) or converting them into in-plane magnetic films by heat-treating them, the third term (- σ(x)/x) of the right side of the equation (2) can be ignored. Therefore, by remarkably reducing the magnetization of the displacement layer 160 and by non-magnetizing both sides of the recording track or converting them into in-plane magnetic films by heat-treating them, the right side of the equation (2) is constructed only by the fourth term and is equal to the equation (1), so that the reproduction by the DWDD system can be executed.

Consequently, the process for non-magnetizing both sides of the recording track or converting them into in-plane magnetic films by heat-treating them is a very important process in order to realize the above system. By the heat treatment, magnetic anisotropy of the heating portion deteriorates and the magnetic coupling is weakened. In the heat treatment (also referred to as initialization or annealing treatment), since a track density can be raised by executing the heat treatment to a narrow area between the tracks, a spot smaller than the spot which is used for recording/reproduction of the magnetooptic information recording medium is often used. That is, an apparatus for executing the heat treatment is often prepared separately from the apparatus for executing the recording/reproduction.

However, in the foregoing magnetooptic information recording medium, even if the heat treatment is executed, a change in magnetism merely occurs in the treatment target portion and a method of determining or inspecting whether or not the heat treatment has properly been executed does not exist. On the other hand, if a width of heat treatment (heat treatment power) is too small, although recording performance of the track is improved, a proper recording power margin cannot be assured. If the width is too large, the recording performance of the track deteriorates.

It is, therefore, an object of the invention to provide a heat treatment determining method and a heat treatment determining apparatus of a magnetooptic information recording medium, in which whether or not a heat treatment has properly been executed, in other words, whether or not a proper width has been heat-treated (by a proper power) can be easily determined.

Disclosure of Invention

According to the invention, there is provided a heat treatment determining method comprising the steps of: executing a heat treatment of a magnetic layer by irradiating a laser beam of a first power to an area between tracks of a magnetooptic information recording medium obtained by laminating the magnetic layer onto a substrate on which the tracks have previously been formed, in which the magnetic layer is constructed by a recording layer to hold recording magnetic domains according to recording information, a displacement layer made of a perpendicular magnetic film whose domain wall coercive force is smaller and whose domain wall displacement speed is higher than those of the recording layer, and a switching layer which is arranged between the recording layer and the displacement layer and whose Curie temperature is lower than those of the recording layer and the displacement layer; irradiating a laser beam of a second power smaller than the first power to the heat-treated area; detecting a level of a magnetooptic signal from reflection light of the laser beam of the second power; and determining whether the heat treatment is proper or improper on the basis of the detected magnetooptic signal.

According to the invention, there is provided a heat treatment determining apparatus comprising: heat treatment means for executing a heat treatment of a magnetic layer by irradiating a laser beam of a first power to an area between tracks of a magnetooptic information recording medium obtained by laminating the magnetic layer onto a substrate on which the tracks have previously been formed, in which the magnetic layer is constructed by a recording layer to hold recording magnetic domains according to recording information, a displacement layer made of a perpendicular magnetic filmwhose domain wall coercive force is smaller and whose domain wall displacement speed is higher than those of the recording layer, and a switching layer which is arranged between the recording layer and the displacement layer and whose Curie temperature is lower than those of the recording layer and the displacement layer; irradiating means for irradiating a laser beam of a second power smaller than the first power to the heat-treated area; detecting means for detecting a level of a magnetooptic signal from reflection light of the laser beam of the second power; and determining means for determining whether the heat treatment is proper or improper on the basis of the detected magnetooptic signal.

Brief Description of Drawings

Fig. 1 is a block diagram showing a construction of a heat treatment determining apparatus according to the first embodiment of the invention.
Fig. 2 is a graph showing an example of a relation between a heat treatment power and a magnetooptic signal.
Fig. 3 is a graph showing an example of a relation between the heat treatment power and a recording power margin.
Fig. 4 is a block diagram showing a construction of a heat treatment determining apparatus according to the second embodiment of the invention.
Fig. 5 is a schematic diagram showing a structure of a groove substrate.
Fig. 6 is a schematic diagram showing a structure of a sampling servo substrate.
Fig. 7 is a flowchart showing an example of the operation of a controller in the heat treatment determining apparatus of the invention.

Figs. 8A and 8B are schematic diagrams showing layout examples of spots of laser beams which are irradiated onto a magnetooptic disk.

Figs. 9A and 9B are schematic diagrams showing layout examples of the spots of the laser beams which are irradiated onto the magnetooptic disk.

Fig. 10 is a schematic diagram showing a cross section of a magnetooptic disk of the DWDD system.

Fig. 11 is a schematic diagram showing a structure of the magnetooptic disk shown in Fig. 10.

Figs. 12A to 12E are schematic diagrams for use in explanation of a principle of the DWDD system.

Best Mode for Carrying Out the Invention

According to the invention, in order to determine whether or not a heat treatment in a magnetooptic disk has properly been executed, a heat treatment target portion in which a magnetization change is caused by the heat treatment is read by a laser pickup, thereby detecting a magnetooptic signal (MO signal) in this portion. At this time, it is desirable that a proper modulation signal has been recorded in the portion to be heat-treated or such a portion has been magnetized in one direction.

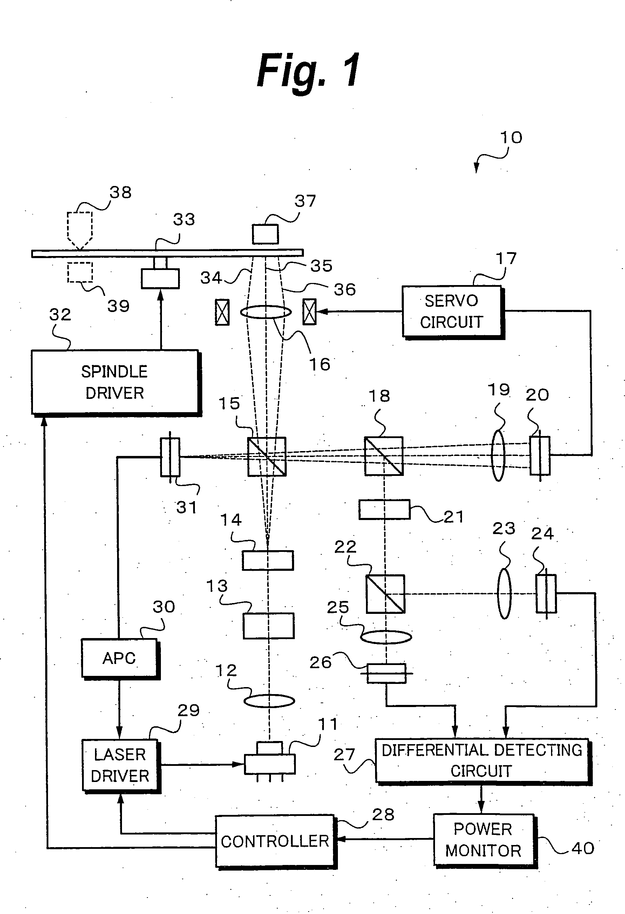

First, the first embodiment of a heat treatment determining apparatus for determining whether or not the heat treatment (annealing treatment) of a magnetic layer between tracks of the magnetooptic information recording medium constructed as mentioned above has properly been executed will be described with reference to Fig. 1. The heat treatment determining apparatus of the embodiment executes the conventional heat treatment and determines whether or not the heat treatment has properly been executed by detecting a magnetooptic signal of the heat-treated portion. A series of component elements including an LD 11, a collimator 12, a servo circuit 17, and the like, which will be explained hereinafter, corresponds to heat treatment means for executing the conventional heat treatment and irradiating means for irradiating a laser beam to detect a level of the magnetooptic signal. Photodetectors 24 and 26 and a differential detecting circuit 27 (and a power monitor 40), which will be explainedhereinafter, correspond to detecting means for detecting the level of the magnetooptic signal. A controller 28 corresponds to determining means for determining whether the heat treatment is proper or improper on the basis of the detected level of the magnetooptic signal. The controller 28 controls the operations of other component elements of a heat treatment determining apparatus 10.

The heat treatment determining apparatus 10 of the embodiment uses the laser diode (LD) 11 for oscillating a laser whose wavelength is equal to about 400 nm as a light source and uses an objective lens 16 whose numerical aperture is equal to 0.85. The above component elements are nothing but an embodiment of the invention and other various light sources, lenses, and the like can be used in the heat treatment determining apparatus 10.

A laser beam (light beam) which is oscillated from the LD 11 is converted into parallel light by the collimator (collimator lens) 12, thereafter, passes through a shaping prism 13, and is separated into three laser beams, that is, one 0-order diffraction light and two kinds of first-order diffraction light by a diffraction grating 14. Those laser beams are separated by a beam splitter 15 into, for example, light which is directed toward a power monitor 31 including a photodiode and light which is directed toward a magnetooptic disk 33. A detection result of the power monitor 31 is transmitted to an APC (Auto Power Control) 30 and the APC 30 controls a laser driver 29 so as to control an output of the LD 11.

The three laser beams directing toward the magnetooptic disk 33 are converged by the objective lens 16 and irradiated onto the magnetooptic disk 33. For example, a 0-order diffraction laser beam 35 is a laser beam for the heat treatment or the heat treatment determination. First-order diffraction laser beams 34 and 36 are laser beams for tracking. The three laser beams 34 to 36 are reflected by the magnetooptic disk 33 and enter a photodetector 20 through the beam splitter 15. The photodetector 20 has a photodetector for a servo. The reflection light of each of the laser beams 34 and 36 is detected by the photodetector for the servo in order to perform a tracking servo. The reflection light of the laser beam 35 is detected by a detector for a servo in order to perform a focusing servo. Although not shown, an optical head including the objective lens 16 can be moved in the radial direction of the magnetooptic disk 33 by an optical head transportingmechanism. Further, the controller 28 transmits a control signal to a spindle driver 32 and controls the rotation of the magnetooptic disk 33.

The laser beam from the LD 11 is actuator-controlled by the focusing servo and the tracking servo so that a focal point is in-focused onto the magnetooptic disk 33 and a predetermined position is traced. The focusing servo control and the tracking servo control are realized by the servo circuit 17.

The reflection light of the laser beam 35 is separated by a beam splitter 18 into light which is directed toward a $\lambda/2$ plate 21 and, further, separated into light which is directed toward the photodetector 24 and light which is directed toward the photodetector 26, respectively. In the embodiment, for example, a P wave is inputted to the photodetector 24 and an S wave is inputted to the photodetector 26. There is such a nature that when the laser beam 35 is reflected by the magnetized surface of the magnetooptic disk 33, a polarization plane of the reflection light is rotated in accordance with the magnetic field. Such a nature is called a Kerr effect.

As will be explained hereinafter, when the heat treatment power is increased, the magnetooptic signal which is obtained from the reflection light from the portion where the heat treatment has been performed changes gradually.

According to the invention, an attention is paid to such a nature, the magnetooptic signal in the portion where the heat treatment has been performed is detected from the P wave and the S wave, and a magnitude of the heat treatment power is determined, that is, whether the heat treatment is proper or improper is determined on the basis of the detection result.

Although the embodiment is made on the assumption that when a magnetooptic film of the magnetooptic disk is formed, the magnetizing direction is deviated to a predetermined direction, it is also possible to construct in such a manner that before the heat treatment, for example, the heat treatment target portion is preliminarily magnetized in one direction by a laser beam 38 and a magnetic head 39 shown in Fig. 1. By this construction, the above determination can be easily made. In place of the magnetization, if a modulation signal is preliminarily recorded in the heat treatment target portion and an amplitude of the magnetooptic signal is detected from the reflection light, the signal amount is increased to twice as large as that in the case where the magnetization is executed. Therefore, the above determination can be made much easier.

The uniform magnetization of the magnetooptic disk or the recording of the modulation signal may be simultaneously executed. That is, while the laser beam which is used for the heat treatment is tracing, a uniform magnetic field or a modulation magnetic field is applied. For example, an objective lens with a magnetic coil is used as means for generating a magnetic field for recording. In the invention, for example, since a high frequency is unnecessary as a modulation signal, a magnetic head 37 arranged on the substrate side may be used. Further, in the case of executing the uniform magnetization, a permanent magnet may be used.

Since the uniform magnetization or the recording of the modulation signal as mentioned above cannot be executed after the heat treatment is executed, the determination about whether the heat treatment is proper or improper can be made by using such a principle. That is, after the heat treatment was executed, the uniform magnetization or the recording of the modulation signal is executed by the laser beam 38 and the magnetic head 39 by a smaller power adapted to perform the heat treatment to the portion where the heat treatment was executed. After that, a reproduction signal, that is, the magnetooptic signal of this portion is detected by the foregoing photodetectors 24 and 26 and differential detecting circuit 27. If the heat treatment has properly been executed, since the recording to this portion cannot be executed, the magnetooptic signal corresponding to such a state is obtained. On the other hand, if the heat treatment is not properly executed due to some reasons, the magnetooptic signal at the level corresponding to such a state is obtained.

The reflection light amounts detected by the photodetectors 24 and 26 are inputted to the differential detecting circuit 27. In the differential detecting circuit 27, if only the P wave or the S wave is used, an amplitude difference is small. Therefore, the amplitude is doubled by overlaying those two signals, thereby improving detecting precision of the magnetooptic signal. Since the same noise is generated in both of the P wave and the S wave, the noises can be also eliminated by using those two signals.

The magnetooptic signal detected by the differential detecting circuit 27 is sent to the power monitor 40. For example, the power monitor 40 converts the detection result into the digital signal and transfers it to the controller 28. As necessary, the power monitor 40 displays the values of the digital magnetooptic signal onto a display or the like.

From the received detection result, the controller 28 determines whether or not it is the proper magnetooptic signal (amplitude). The detection result can be used for feedback control of the heat treatment power so that the constant proper heat treatment is continuously executed. The control of the heat treatment power is made by a method whereby, for example, a predetermined command is transmitted from the controller 28 to the laser driver 29 and the output of the LD 11 is controlled. When the received magnetooptic signal does not have a proper value, the controller 28 can display an alarm indicative of such a fact or stop the process of the magnetooptic disk.

A push-pull method is used for the tracking servo mechanism in the embodiment. That is, control is made in such a manner that the two tracking laser beams (34, 36) are irradiated onto the recording/reproducing tracks (land 151, groove 152) adjacent to the wall surface portion 153 in Fig. 11 serving as a target of the heat treatment or the heat treatment determination, respectively, and by calculating the reflection light amounts, the laser beam 35 is certainly irradiated onto the wall surface portion 153. An area of the spot of the laser beam 35 on the magnetooptic disk 33 is generally smaller than that of the spot of each of the laser beams (34, 36).

As mentioned above, since the laser beam for determining whether or not the heat treatment has properly been executed also traces the same wall surface portion 153 as that for the heat treatment, an apparatus similar to the apparatus for executing only the heat treatment of the magnetooptic disk can be used as tracking means. For example, the method used in the optical disk heat treatment apparatus disclosed in JP-A-2002-319201 can be applied.

In the above optical disk heat treatment apparatus , the laser beam is separated by a diffraction grating or the like into three kinds of laser beams such as laser beam for the heat treatment and two laser beams for tracking and the tracking for the heat treatment is realized by the sampling servo system using wobble pits. In the embodiment, it is applied to the land/groove substrate so as to be realized by the push-pull system. That is, as mentioned above, one of the tracking laser beams traces the land 151 and the other traces the groove 152, thereby allowing the laser beam for the heat treatment determination to trace a boundary portion (wall surface portion 153) between the land 151 and the groove 152.

The laser beam is first irradiated onto the wall surface portion 153 of the magnetooptic disk 33 as mentioned above, so that the magnetic layer of this portion is non-magnetized or converted into the in-plane magnetic film (that is, heat-treated). A width to be heat-treated increases in association with an increase in LD power.

In the embodiment, after the irradiation of the laser beam for the heat treatment is performed to at least a predetermined range of the wall surface portion 153 of the magnetooptic disk 33, the laser beam of a power smaller than that of the laser beam for the heat treatment is irradiated again to the wall surface portion 153 in such a range, and the magnetooptic signal is detected from the reflection light, thereby determining whether or not the heat treatment has properly been executed. For example, the innermost rim track of the magnetooptic disk is set as a test zone. The heat treatment is executed in the test zone, after that, the magnetooptic signal is detected, and whether or not the heat treatment has properly been executed is determined. If it is determined that the heat treatment has properly been executed, the heat treatment is executed with respect to all of the residual tracks by the heat treatment power used for the heat treatment.

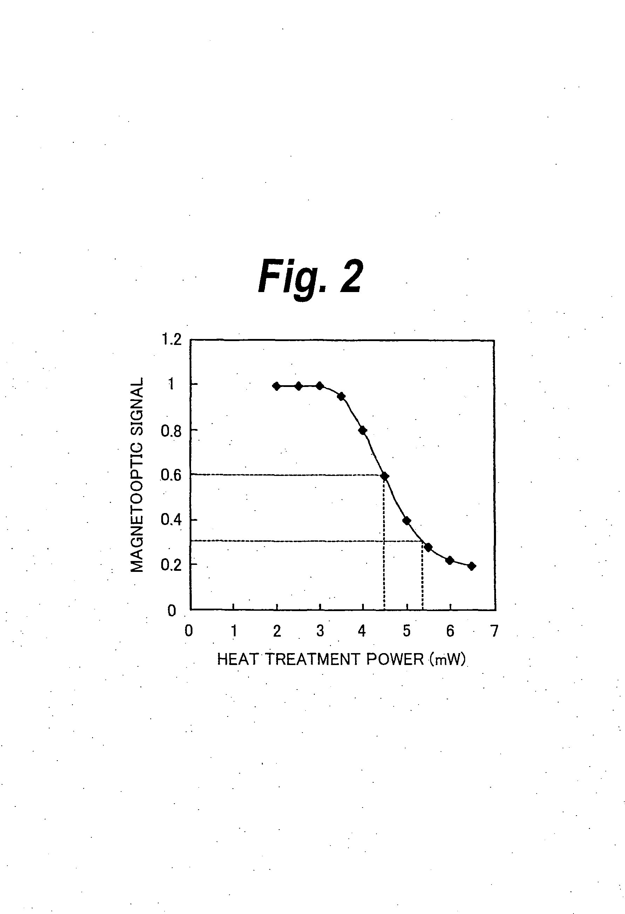

A procedure to specify the proper magnetooptic signal will now be described. Fig. 2 is a graph showing an example of a relation between the heat treatment power and the magnetooptic signal. A relative speed of the magnetooptic disk to the laser beam at the time of the heat treatment is equal to, for example, 4m/sec. An axis of ordinate (magnetooptic signal) of the graph of Fig. 2 indicates the level of the magnetooptic signal (MO signal) obtained from the P wave and the S wave of the reflection light when the heat-treated wall surface portion 153 is traced by the low laser power of 0.5 mW after completion of the heat treatment. A numerical value of the axis of ordinate of the graph is shown as a relative value in which a predetermined value is set to a reference. Quality of the magnetooptic signal in the case where the recording/reproduction of the magnetooptic disk has been executed is determined by the width of beam spot in the heat treatment.

As will be understood from Fig. 2, when the heat treatment power is equal to about 2 to 3 mW, there is no large change in the level of the magnetooptic signal. However, when the heat treatment power is equal to about 3 to 6 mW, as the heat treatment power increases, the level of the magnetooptic signal decreases. It is desirable that the magnetooptic disk has been DC magnetized before the heat treatment, during the heat treatment, or after the heat treatment or the modulation signal has been recorded. Thus, the level of the magnetooptic signal after the heat treatment changes from that before the heat treatment and a change rate varies depending on the heat treatment power.

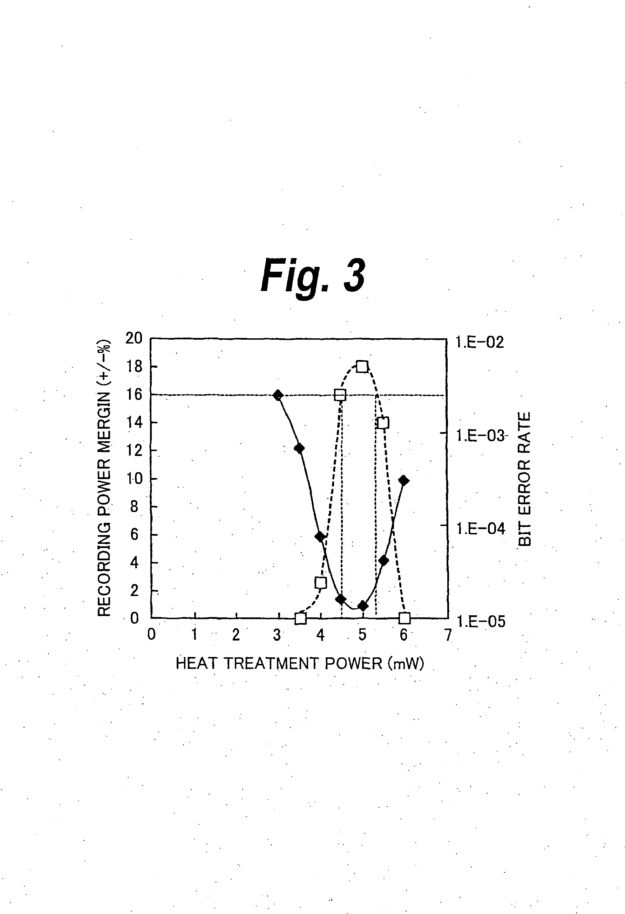

Fig. 3 is a graph showing an example of a relation between the heat treatment power and a recording power margin and a relation between the heat treatment power and a bit error rate. A wavelength of the LD of the magnetooptic signal recording/reproducing apparatus used for the recording/reproduction of the magnetooptic disk is equal to 660 nm. A numerical aperture of the objective lens is equal to 0.6. In the above apparatus, the laser beam is irradiated from the substrate side. A groove pitch of the magnetooptic disk used in this example is equal to 1.08 $\mu$m and a track pitch is equal to 0.54 $\mu$m.

The recording power margin denotes a margin of the recording power in which the bit error rate is equal to or less than a predetermined value. With respect to overwriting characteristics and cross-writing characteristics, the bit error rate changes depending on the recording power. However, the recording power margin is obtained from an upper limit value, a lower limit value, and an intermediate value of the recording power in which the bit error rate is equal to or less than the predetermined value, for example, $10^{-4}$. For example, assuming that the upper limit value = 0.9 and the lower limit value = 1.1, the intermediate value = 1.0 and a range which satisfies the above bit error rate is a range of 10% in the direction of the upper limit or the lower limit from the intermediate value. In this case, the recording power margin is equal to +/-10%. The recording power is a power for recording/reproducing the magnetooptic information onto/ from the magnetooptic disk and differs from the heat treatment power.

Such a recording power margin changes depending on the heat treatment power which is used upon execution of the heat treatment. In Fig. 3, a curve shown by a broken line indicates the relation between the heat treatment power and the recording power margin. An axis of ordinate of the left side denotes a scale of the recording power margin and its unit is set to (+/2)%. In this example, the recording power margin occurs in a range where the heat treatment power is equal to about 3.5 to about 6 mW and the recording power margin becomes a peak (about +/-18%) when the heat treatment power is equal to about 5 mW.

On the other hand, a curve shown by a solid line indicates the relation between the heat treatment power and the bit error rate. In more details, it shows a bottom (minimum value) of the bit error rate at the heat treatment power. A scale of the bit error rate is set on an axis of ordinate on the right side.

In the quality management upon manufacturing of the magnetooptic disk, such a recording power margin is often used as a reference. It is now assumed that a value of +/-16% or more is required as a recording power margin. Thus, it will be understood that it is necessary to set the heat treatment power to a value within a range from about 4.5 to 5.2 mW. Subsequently, referring to Fig. 2 again, it will be understood that the level of the magnetooptic signal corresponding to the range (that is, from 4.5 to 5.2 mW) of the heat treatment power is equal to about 0.3 to 0.6.

In this case, therefore, in the heat treatment determination of the magnetooptic disk, the disk in which the magnetooptic signal according to the reflection light is at the level of about 0.3 to 0.6 passes an inspection or it is necessary to control the heat treatment so as to obtain such reflection light. If the heat treatment is executed while monitoring the reflection light as mentioned above, a mistake of the heat treatment step can be prevented. Since the correlations shown in Figs. 2 and 3 are influenced by a delicate structure or the like of the magnetooptic disk, those characteristics can also change on a lot unit basis (for example, 1000 magnetooptic disks) or a unit less than 1000.

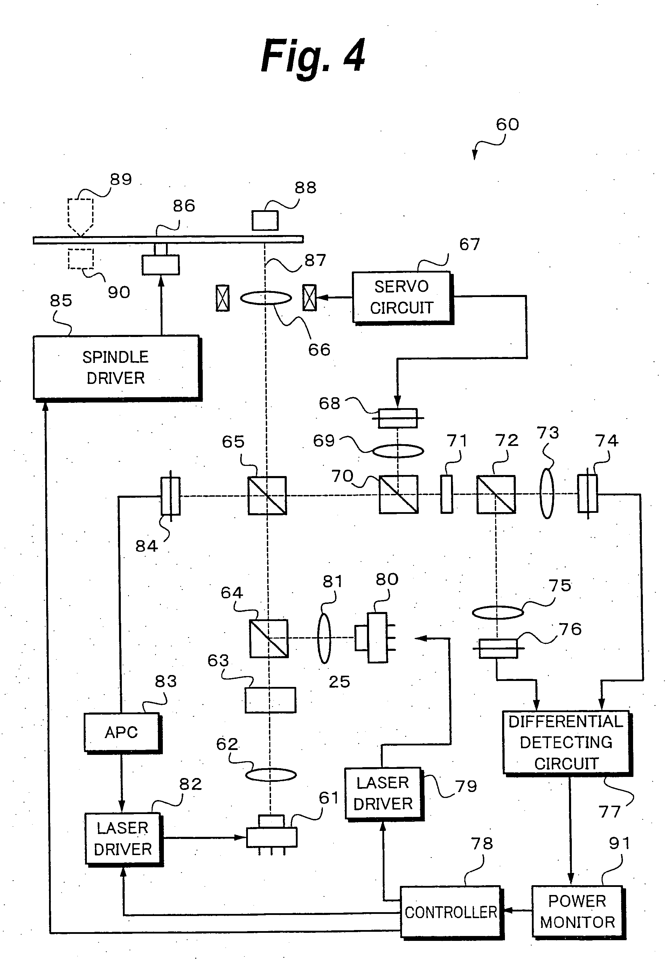

A heat treatment determining apparatus according to the second embodiment of the invention will now be described with reference to Fig. 4. In the heat treatment determining apparatus of the first embodiment mentioned above, the laser beam from the LD 11 is separated into the three laser beams by using the diffraction grating 14. One laser beam is used for the heat treatment or the detection of the reflection light amount and the two residual laser beams are used for tracking. However, it is also possible to construct in such a manner that two LDs are prepared, one of them is used for the heat treatment or the detection of the magnetooptic signal and the other is used for tracking. A series of component elements including an LD 61, a collimator 62, a servo circuit 67, and the like, which will be explained hereinafter, corresponds to the heat treatment means for executing the conventional heat treatment and the irradiating means for irradiating the laser beam to detect the level of the magnetooptic signal. Photodetectors 74 and 76 and a differential detecting circuit 77 (and a power monitor 91), which will be explained hereinafter, correspond to the detecting means for detecting the level of the magnetooptic signal. A controller 78 corresponds to the determining means for determining whether the heat treatment is proper or improper on the basis of the level of the magnetooptic signal detected as mentioned above. The controller 78 controls the operations of other component elements of a heat treatment determining apparatus 60.

In the heat treatment determining apparatus 60 in Fig. 4, the LD 61 is a laser beam source to perform the irradiation for the heat treatment and the detection of the magnetooptic signal and an LD 80 is a laser beam source for tracking. The laser beam from the LD 61 is irradiated (laser beam 87) onto a magnetooptic disk 86 through the collimator 62, a shaping prism 63, beam splitters 64 and 65, and an objective lens 66. Reflection light of the laser beam 87 irradiated in this manner is detected by the photodetectors 74 and 76. The photodetectors 74 and 76 detect reflection light amounts of the P wave and the S wave, respectively, in a manner similar to the photodetectors 24 and 26 described with respect to Fig. 1.

Detection results from the photodetectors 24 and 26 are sent to the differential detecting circuit 77 and the level of the magnetooptic signal is detected there. A detection result is transferred to the power monitor 91, by which digital conversion or the like of the detected level of the magnetooptic signal is executed and the digital signal is transferred to the controller 78. The controller 78 determines whether the heat treatment is proper or improper on the basis of the supplied detection result and controls laser drivers 79 and 82, a spindle driver 85, or the like in accordance with the detection result, thereby allowing the proper heat treatment to be executed.

The laser beam from the LD 80 is irradiated (laser beam 87) onto the magnetooptic disk 86 through a collimator 81, the beam splitters 64 and 65, and the objective lens 66. Reflection light of the laser beam 87 irradiated in this manner is detected by a photodetector 68 through the beam splitter 65 and a beam splitter 70. Tracking control is made by the servo circuit 67 on the basis of its detection result. The beam splitters 64, 65, and 72 are polarization beam splitters.

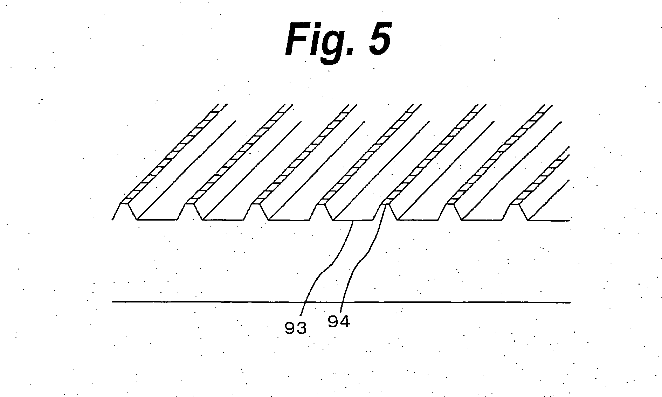

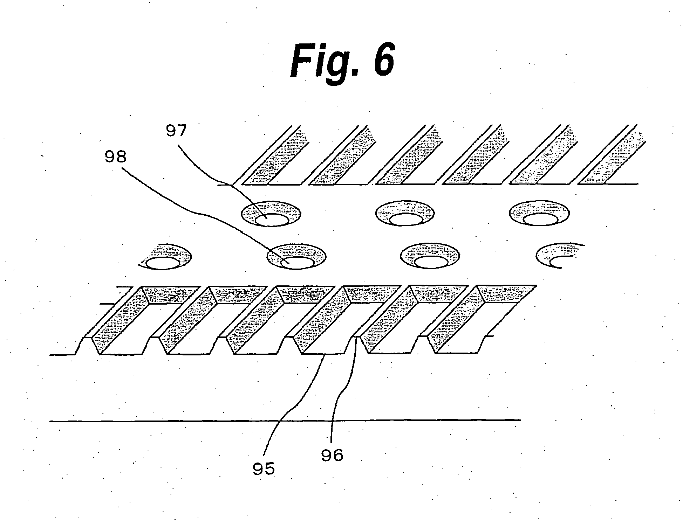

In the heat treatment determining apparatus of the embodiment, since it is presumed that a land/groove substrate having the lands and grooves is used as a magnetooptic disk 86, the laser beam for the heat treatment (and for the detection of the magnetooptic signal) and the laser beam for the tracking have separately been prepared as mentioned above. However, in what is called a groove substrate as shown in Fig. 5 or a sampling servo substrate formed with guide grooves as shown in Fig. 6, there is no need to additionally prepare the laser beam for the tacking in order to heat-treat the land portion. The groove substrate of Fig. 5 includes grooves 93 and lands 94 shown by hatched regions and the portions of the lands 94 become targets for the heat treatment and the heat treatment determination. The sampling servo substrate of Fig. 6 is constructed by grooves 95, lands 96, and pits 97 and 98. The lands 96 become targets for the heat treatment and the heat treatment determination.

In the sampling servo substrate of Fig. 6, the tracking is executed to the portions of the lands 96 at the time of the heat treatment and the heat treatment determination. The pits 98 are traced by the laser beam of the large spot upon recording/reproduction, thereby allowing a tracking error signal to be generated.

A heat treatment determining apparatus according to the third embodiment of the invention will now be described. The heat treatment determining apparatus of the first embodiment uses a construction in which the power of the laser beam used for the heat treatment is reduced and the heat-treated portion is traced again by the reduced power, and an amount of the reflection light is detected. However, the detecting process can be executed by another method. For this purpose, in the heat treatment determining apparatus of the third embodiment, a second optical pickup different from the first optical pickup for the heat treatment is mounted. The heat-treated portion is traced by the second optical pickup by the power lower than the LD power which is used for the heat treatment, thereby determining whether or not the heat treatment has properly been executed. By such a construction, the first optical pickup and the second optical pickup can be made operative in parallel and the time of the heat treatment step including the heat treatment determination can be shortened.

In a heat treatment determining apparatus according to the fourth embodiment of the invention, two LDs are used for the magnetooptic disk as shown in Fig. 5 or 6. That is, the two LDs are arranged in such a manner that a laser beam from one of the LDs is used in common for the heat treatment and for the tracking and traces the land and, after the heat treatment, a laser beam from the other LD traces the heat-treated portion (land) in order to detect the reflection light amount. According to this construction, whether or not the heat treatment has properly been executed can be determined by the subsequent laser beam.

A heat treatment determining apparatus according to the fifth embodiment of the invention is made to improve the heat treatment determining apparatus of the first embodiment. In the first embodiment, the laser beam is separated into the three laser beams by the diffraction grating 14, the 0-order diffraction light is used for the heat treatment, and the first-order diffraction light is used for the tracking. However, in the fifth embodiment, the 0-order diffraction light is used for the heat treatment and for the tracking. The preceding first-order diffraction light is used to trace the heat treatment portion which is traced by the 0-order diffraction light and the subsequent first-order diffraction light is used for detection of the reflection light amount. To prevent the heat treatment from being executed by the first-order diffraction light, it is desirable that the first-order diffraction light is sufficiently small as a spectrum ratio. Because of a similar reason, it is desirable that a spot size of the first-order diffraction light is larger than that of the 0-order diffraction light.

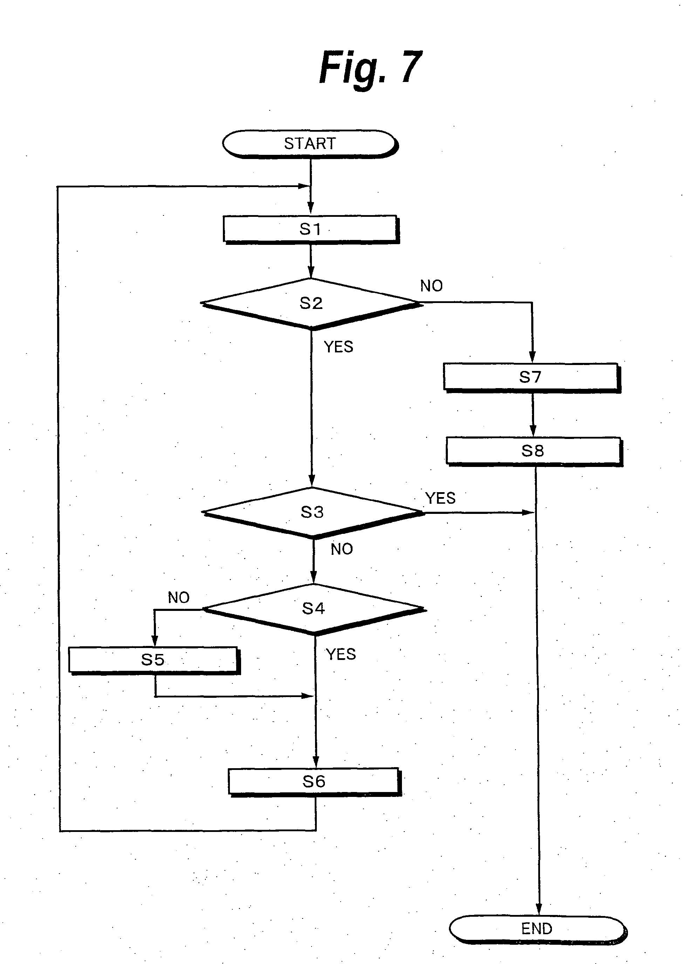

An example of the operation of the controller 28 shown in Fig. 1 or the controller 78 shown in Fig. 4 will now be described with reference to a flowchart of Fig. 7. A case where the controller controls the process for the heat treatment and the process for determining whether or not the heat treatment has properly been executed is considered here. The heat treatment process and the determining process are executed in parallel. The portion which was heat-treated by the heat treatment process is determined by the determining process after a little while after completion of the heat treatment. The flowchart of Fig. 7 shows the determining process.

In the heat treatment process, the laser beam is irradiated, for example, onto the wall surface portion 153 of the magnetooptic disk by the heat treatment power which has been preset. If the heat treatment was executed by the improper heat treatment power due to some causes, the determining process detects such a fact and executes a predetermined process.

The determining process of Fig. 7 will be described hereinbelow. First, in step S1, the controller (28, 78) controls in such a manner that the laser power of the power lower than the power used for the heat treatment is irradiated to the heat-treated portion and the level of the magnetooptic signal is detected from the reflection light amount. The reflection light amount is obtained through the photodetector (24, 26, 74 , 76) and provided, for example, as a predetermined current value to the differential detecting circuit (27, 77). The differential detecting circuit (27, 77) detects the level of the magnetooptic signal from the provided reflection light amount and supplies it to the controller (28, 78) through the power monitor (40, 91). In step S2, whether or not the detected level of the magnetooptic signal lies within a permissible range. The permissible range of the magnetooptic signal level is determined, for example, as mentioned in Figs. 2 and 3. That is, the heat treatment power at which the recording power margin of a predetermined value or more is obtained is derived from Fig. 3. The range of the magnetooptic signal level corresponding to the heat treatment power obtained in this manner is derived from Fig. 2 and set to the range of the magnetooptic signal level mentioned above. In the example of Fig. 2, it is a range from 0.3 to 0.6. This range of the magnetooptic signal level is set, for example, every manufacturing lot of the magnetooptic disk, stored into a memory or the like in the controller (28, 78), and referred to at the time of the above determination.

If it is determined in step S2 that the magnetooptic signal level lies within the permissible range, whether or not the determination targets still exist is determined in step S3. If there are no determination targets, the process is finished. If the determination targets remain, step S4 follows and whether or not the detected level of the magnetooptic signal lies within a predetermined range narrower than the permissible range is determined. If it is decided in step S4 that the detected magnetooptic signal level is out of the predetermined range, step S5 follows. The setting of the heat treatment power is changed so that the optimum recording power margin can be obtained and the changed heat treatment power is transmitted to the heat treatment process which operates in parallel. If it is sufficient merely to determine whether or not the magnetooptic signal level lies within the permissible range, steps S4 and S5 can be also omitted.

If it is determined in step S4 that the magnetooptic signal level lies within the predetermined range, step S6 follows and the position of the magnetooptic disk is controlled so as to make a determination of the next heat treatment portion. The processing routine is returned to step S1. In the case where the setting of the heat treatment power is changed in step S5 , the processing routine also advances to step S6 and, after that, is returned to step S1.

If it is determined in step S2 that the detected magnetooptic signal level is out of the permissible range, step S7 follows and a message showing such a fact is displayed on a display apparatus or the like. The heat treatment of the magnetooptic disk which has precedently been executed is stopped in step S8 and the determining process is also finished. Such a procedure is taken because it is decided that the magnetooptic disk which is being processed does not satisfy the required quality. With respect to the subsequent heat treatment of the magnetooptic disk, some improvement such as resetting of the heat treatment power or the like is requested. In this example, when the magnetooptic signal level is out of the permissible range, the heat treatment process and the determining process are stopped as mentioned above. However, another countermeasure method can be also used.

The operation of the controller as mentioned above can be realized by control by a microcomputer, control by a CPU based on commands of a program loaded in a memory, or the like.

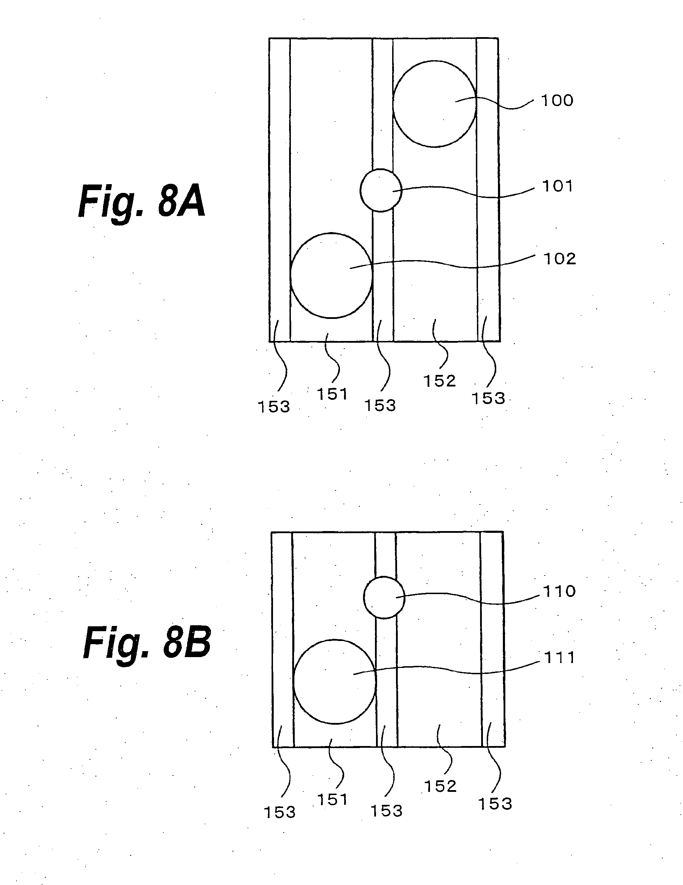

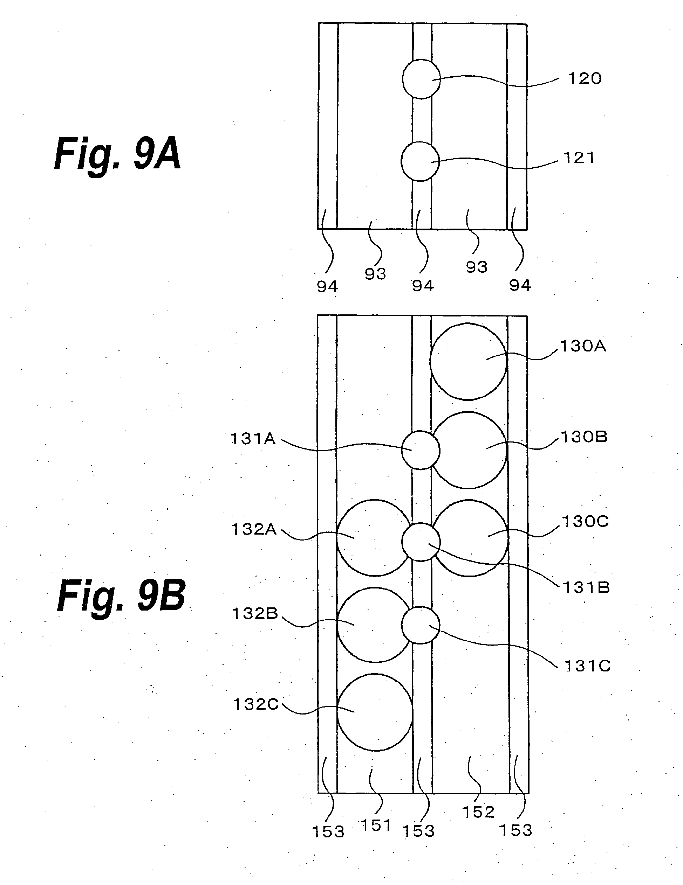

A positional relation of the spots of the laser beams which are irradiated onto the magnetooptic disk will now be described with reference to Figs. 8A, 8B, 9A, and 9B. Fig. 8A shows an example of a layout of the spots in the case of using the heat treatment determining apparatus according to the first embodiment. According to the construction of the magnetooptic disk shown in the diagram, it is a land/groove substrate similar to that of Fig. 11 and is constructed by the lands 151, grooves 152, and wall surface portions 153. Spots 100, 101, and 102 of the laser beams correspond to the spots of the three laser beams 34, 35, and 36 shown in Fig. 3, respectively. The spot 101 corresponds to the spot of the 0-order diffraction laser beam 35 and the heat treatment or the heat treatment determination is executed by the irradiation of such a laser beam. The spots 100 and 102 correspond to the spots of the first-order diffraction laser beams 34 and 36 and trace the land 151 and the groove 152, respectively, so that they are used for the tracking servo. As will be obviously understood from the diagram, in this example, an area of the spot 101 on the medium (magnetooptic disk) is smaller than that of each of the spots 100 and 102 on the medium.

Fig. 8B shows an example of a layout of the spots in the case of using the heat treatment determining apparatus according to the second embodiment. According to the construction of the magnetooptic disk shown in the diagram, it is a land/groove substrate similar to that of Fig. 11. Spots 110 and 111 of the laser beams correspond to the spots of the laser beam 87 in Fig. 4. The spot 110 is a spot of the laser beam irradiated from the LD 61 and used for the heat treatment or the heat treatment determination. The spot 111 is a spot of the laser beam irradiated from the LD 80 and used for the tracking servo.

Fig. 9A shows an example of a layout of the spots of the laser beams which are irradiated onto the groove substrate or sampling servo substrate shown in Fig. 5 or 6. A spot 120 is a spot of the laser beam used for the heat treatment. A spot 121 is a spot of the laser beam used for the heat treatment determination. In this example, those spots are irradiated from different LDs. It is also possible to separate a laser beam from one LD into three laser beams by a diffraction grating and allocate two of them as laser beam spots for the heat treatment or the heat treatment determination, respectively. In this example, the spots 120 and 121 have almost the same diameter.

Fig. 9B shows an example in which nine laser beams are irradiated onto a land/groove substrate by using two diffraction gratings. The apparatus is constructed in such a manner that the laser beams of spots 130B and 132B are used for the tracking, the laser beam of a spot 131B is used for the heat treatment, and the laser beam of a spot 131A is used for the heat treatment determination.

It is also possible to control in such a manner that an area of the spot of the laser beam for the heat treatment on the medium is smaller than that of the spot of the laser beam to detect the magnetooptic signal of the heat-treated area.

As will be also obvious from the above explanation , many elements among the component elements to determine whether the heat treatment is proper or improper are common to those used for the heat treatment. Therefore, each of the above embodiments is also constructed so as to realize the determining process by the conventional heat treatment apparatus. However, it is unnecessary that the detecting process is limited to such a construction. For example, the invention can be constructed as a monitoring apparatus for measuring and displaying the level of the magnetooptic signal of the magnetooptic disk or as a dedicated heat treatment determining apparatus for determining whether or not the heat treatment of the magnetooptic disk has properly been executed as necessary.

**Claims**

1. A heat treatment determining method comprising the steps of:

    executing a heat treatment of a magnetic layer by irradiating a laser beam of a first power to an area between tracks of a magnetooptic information recording medium obtained by laminating the magnetic layer onto a substrate on which the tracks have previously been formed,
    in which said magnetic layer is constructed by
    a recording layer to hold recording magnetic domains according to recording information,
    a displacement layer made of a perpendicular magnetic film whose domain wall coercive force is smaller and whose domain wall displacement speed is higher than those of said recording layer, and
    a switching layer which is arranged between said recording layer and said displacement layer and whose Curie temperature is lower than those of said recording layer and said displacement layer;
    irradiating a laser beam of a second power smaller than said first power to said heat-treated area;
    detecting a level of a magnetooptic signal from reflection light of the laser beam of said second power; and
    determining whether said heat treatment is proper or improper on the basis of said detected magnetooptic signal.

**2.** A heat treatment determining method according to claim 1, wherein
a predetermined signal is recorded onto said magnetooptic information recording medium upon execution, before execution, or after execution of said heat treatment.

**3.** A heat treatment determining method according to claim 1, wherein
said magnetooptic information recording medium is magnetized in one direction upon execution, before execution, or after execution of said heat treatment.

**4.** A heat treatment determining method according to claim 1, wherein
an area of a spot of the laser beam of said second power on said magnetooptic information recording medium is larger than that of a spot of the laser beam of said first power.

**5.** A heat treatment determining apparatus comprising:

heat treatment means for executing a heat treatment of a magnetic layer by irradiating a laser beam of a first power to an area between tracks of a magnetooptic information recording medium obtained by laminating the magnetic layer onto a substrate on which the tracks have previously been formed,
in which said magnetic layer is constructed by
a recording layer to hold recording magnetic domains according to recording information,
a displacement layer made of a perpendicular magnetic film whose domain wall coercive force is smaller and whose domain wall displacement speed is higher than those of said recording layer, and
a switching layer which is arranged between said recording layer and said displacement layer and whose Curie temperature is lower than those of said recording layer and said displacement layer;
irradiating means for irradiating a laser beam of a second power smaller than said first power to said heat-treated area;
detecting means for detecting a level of a magnetooptic signal from reflection light of the laser beam of said second power; and
determining means for determining whether said heat treatment is proper or improper on the basis of said detected magnetooptic signal.

**6.** A heat treatment determining apparatus according to claim 5, wherein
a predetermined signal is recorded onto said magnetooptic information recording medium upon execution, before execution, or after execution of said heat treatment.

**7.** A heat treatment determining apparatus according to claim 5, wherein
said magnetooptic information recording medium is magnetized in one direction upon execution, before execution, or after execution of said heat treatment.

**8.** A heat treatment determining apparatus according to claim 5, wherein
an area of a spot of the laser beam of said second power on said magnetooptic information recording medium is larger than that of a spot of the laser beam of said first power.

# Fig. 1

## Fig. 2

# Fig. 3

# Fig. 4

# Fig. 5

93   94

# Fig. 6

# Fig. 7

```
        ┌─────────┐
        │  START  │
        └─────────┘
             │
             ▼
        ┌─────────┐
        │   S1    │
        └─────────┘
             │
             ▼
          ◇ S2 ◇ ──── NO ────┐
             │                │
            YES               ▼
             │           ┌─────────┐
             │           │   S7    │
             │           └─────────┘
             │                │
             ▼                ▼
          ◇ S3 ◇ ── YES ─┐  ┌─────────┐
             │           │  │   S8    │
            NO           │  └─────────┘
             │           │       │
             ▼           │       │
   NO ──── ◇ S4 ◇        │       │
    │        │           │       │
    │       YES          │       │
    ▼        │           │       │
 ┌─────────┐ │           │       │
 │   S5    │ │           │       │
 └─────────┘ │           │       │
      │      │           │       │
      └──────┤           │       │
             ▼           │       │
        ┌─────────┐      │       │
        │   S6    │      │       │
        └─────────┘      │       │
             │           │       ▼
             │           └──►┌─────────┐
             │               │   END   │
             │               └─────────┘
```

## Fig. 8A

100
101
102

153  151  153  152  153

## Fig. 8B

110
111

153  151  153  152  153

**Fig. 9A**

94    93    94    93    94

**Fig. 9B**

130A
130B
131A
130C
132A
131B
131C
132B
132C
153    151    153    152    153

# Fig. 10

140

| | |
|---|---|
| PROTECTING LAYER | ~147 |
| 2nd DIELECTRIC LAYER | ~146 |
| RECORDING LAYER | ~145 |
| SWITCHING LAYER | ~144 |
| DISPLACEMENT LAYER | ~143 |
| 1st DIELECTRIC LAYER | ~142 |
| SUBSTRATE | ~141 |

# Fig. 11

151

152

153

*Fig. 12A*

*Fig. 12B*

*Fig. 12C*

*Fig. 12D*

*Fig. 12E*

DESCRIPTION OF REFERENCE NUMERALS

10     HEAT TREATMENT DETERMINING APPARATUS

11     LD

12     COLLIMATOR

13     SHAPING PRISM

14     DIFFRACTION GRATING

15     BEAM SPLITTER

16     OBJECTIVE LENS

17     SERVO CIRCUIT

18     BEAM SPLITTER

20     PHOTODETECTOR

21     $\lambda/2$ PLATE

22     BEAM SPLITTER

24     PHOTODETECTOR

26     PHOTODETECTOR

27     DIFFERENTIAL DETECTING CIRCUIT

28     CONTROLLER

29     LASER DRIVER

60     HEAT TREATMENT DETERMINING APPARATUS

61     LD

62     COLLIMATOR

63     SHAPING PRISM

65     BEAM SPLITTER

66     OBJECTIVE LENS

67     SERVO CIRCUIT

| | |
|---|---|
| 68 | PHOTODETECTOR |
| 70 | BEAM SPLITTER |
| 72 | BEAM SPLITTER |
| 74 | PHOTODETECTOR |
| 76 | PHOTODETECTOR |
| 77 | DIFFERENTIAL DETECTING CIRCUIT |
| 78 | CONTROLLER |
| 79 | LASER DRIVER |
| 80 | LD |
| 82 | LASER DRIVER |
| S1 | DETECT LEVEL OF MAGNETOOPTIC SIGNAL OF HEAT TREATMENT PORTION |
| S2 | WITHIN PERMISSIBLE RANGE? |
| S3 | DETERMINATION FINISHED? |
| S4 | PREDETERMINED RANGE? |
| S5 | CHANGE HEAT TREATMENT POWER |
| S6 | MOVE TO NEXT DETECTING AREA |
| S7 | NOTIFY OF ALARM |
| S8 | STOP PRECEDENT HEAT TREATMENT |

## INTERNATIONAL SEARCH REPORT

| | International application No. |
|---|---|
| | PCT/JP2004/012244 |

**A. CLASSIFICATION OF SUBJECT MATTER**
Int.Cl⁷ G11B11/105

According to International Patent Classification (IPC) or to both national classification and IPC

**B. FIELDS SEARCHED**

Minimum documentation searched (classification system followed by classification symbols)
Int.Cl⁷ G11B11/105

Documentation searched other than minimum documentation to the extent that such documents are included in the fields searched
| | | | |
|---|---|---|---|
| Jitsuyo Shinan Koho | 1922–1996 | Jitsuyo Shinan Toroku Koho | 1996–2004 |
| Kokai Jitsuyo Shinan Koho | 1971–2004 | Toroku Jitsuyo Shinan Koho | 1994–2004 |

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
|---|---|---|
| A | JP 2002-319200 A (Matsushita Electric Industrial Co., Ltd.), 31 October, 2002 (31.10.02), Full text; all drawings (Family: none) | 1-8 |
| A | JP 2003-123335 A (Matsushita Electric Industrial Co., Ltd.), 25 April, 2003 (25.04.03), Full text; all drawings & US 2002/154578 A1 | 1-8 |

☐ Further documents are listed in the continuation of Box C.  ☐ See patent family annex.

| | |
|---|---|
| * Special categories of cited documents: | "T" later document published after the international filing date or priority date and not in conflict with the application but cited to understand the principle or theory underlying the invention |
| "A" document defining the general state of the art which is not considered to be of particular relevance | |
| "E" earlier application or patent but published on or after the international filing date | "X" document of particular relevance; the claimed invention cannot be considered novel or cannot be considered to involve an inventive step when the document is taken alone |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search | Date of mailing of the international search report |
|---|---|
| 11 November, 2004 (11.11.04) | 30 November, 2004 (22.11.04) |

| Name and mailing address of the ISA/ | Authorized officer |
|---|---|
| Japanese Patent Office | |
| Facsimile No. | Telephone No. |

Form PCT/ISA/210 (second sheet) (January 2004)